(19) Europäisches Patentamt
European Patent Office
Office européen des brevets

(11) Publication number: **0 218 236 B1**

# (12) EUROPEAN PATENT SPECIFICATION

(45) Date of publication of patent specification: **03.07.91** (51) Int. Cl.5: **C09D 171/00**, C08L 71/00

(21) Application number: **86113893.1**

(22) Date of filing: **07.10.86**

## (54) Formable coatings.

(30) Priority: **08.10.85 US 785385**
**11.04.86 US 850783**

(43) Date of publication of application:
**15.04.87 Bulletin 87/16**

(45) Publication of the grant of the patent:
**03.07.91 Bulletin 91/27**

(84) Designated Contracting States:
**AT BE CH DE FR GB IT LI SE**

(56) References cited:
**GB-A- 1 130 528**
**US-A- 4 370 382**

**JOURNAL OF APPLIED POLYMER SCIENCE, vol. 27, no. 3, March 1982, pages 839-855, John Wiley & Sons, Inc., New York, US; J.E. HARRIS et al.: "Miscible binary blends containing the polyhydroxy ether of bisphenol-A and various aliphatic polyesters"**

**MACROMOLECULES, vol. 14, no. 6, November-December 1981, pages 1644-1650, American Chemical Society, Washington, US; L.M. ROBESON et al.: "Miscibility of the poly(hydroxy ether) of bisphenol a with water-soluble polyethers"**

(73) Proprietor: **UNION CARBIDE CORPORATION**
**39 Old Ridgebury Road**
**Danbury Connecticut 06817(US)**

(72) Inventor: **Colon, Ismael**
**57 Curtis Avenue**
**Piscataway New Jersey 08854(US)**
Inventor: **Merriam, Charles Neale**
**32 Hillcrest Road**
**Martinsville New Jersey 08836(US)**
Inventor: **Wolf, Philip Frank**
**401 Jaguar Lane**
**Summerset New Jersey 08807(US)**

(74) Representative: **Freiherr von Pechmann, Eckehart et al**
**Wuesthoff & Wuesthoff Patent- und Rechtsanwälte Schweigerstrasse 2**
**W-8000 München 90(DE)**

**EP 0 218 236 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Thermoplastic poly(hydroxyethers) are well known in the art and are commonly referred to as phenoxy resins. Likewise, blends of such resins with relatively softer resins are known (US-A-3,925,504 and 4,337,330); blends of these types have been found useful to improve the flexibility of phenoxy resins in processing such as injection molding, or conversely to improve the processability of the resin into which the phenoxy is blended.

Phenoxy resins are also well known as coil coating resins, and in particular as binder resins in zinc-rich, corrosion-resistant coatings (US-A-4,391,855, 4,476,260). Such coatings, while they provide excellent corrosion resistance on nondeformed surfaces, are often not fully satisfactory for uses in which the substrate and coating undergo substantial deformation, or where bake temperatures of less than about 200°C (400°F) are used (so-called "low bake" systems). Typical of uses involving deformation are those involving the stamping and forming of sheet metal, as in the automobile manufacturing industry. As a result of such deformation, corrosion resistance is seriously degraded. While blending the phenoxy resin with softer resins has been reasonably successful for flexibilizing the phenoxy for, e.g., molding purposes, such blends have not proven to be satisfactory in the preparation of, e.g., solvent-borne, zinc-rich coating compositions. The problems encountered derive from a variety of factors: the need to maximize the concentration of the phenoxy resin in order to preserve its contribution to corrosion resistance, the need to achieve compatibility among the blended resins, the need for solubility in certain solvents preferred by the coatings industry, the need to achieve certain glass transition temperatures, and the like. Accordingly, it is desirable to flexibilize the phenoxy resin without significantly impairing either the corrosion resistance or the adhesion of the coating, while at the same time meeting the various processing needs indicated above. This unique balance of diverse properties has been realized by the instant invention.

In addition, with certain metal substrates it is necessary to use relatively low temperature bake cycles (peak metal temperature of less than about 204°C (400°F) in order to prevent the degradation of the good mechanical properties of the metal. With conventional phenoxy resins, it is not practical to use such low temperature bake cycles, because the material does not adequately flow and wet out the substrate to provide good adhesion, which is crucial to the performance of the coating. Using the blends of the instant invention it is possible to provide good adhesion and coating performance even with such low temperature bake cycles.

Further, there are a variety of applications, where the coating must be resistant to solvents or to hot water or steam and still remain highly formable. An example of such an application is in draw-redraw can coatings, where the coatings must undergo extensive elongation. Such coatings are typically crosslinked in order to enhance their blush resistance under steam sterilization conditions, but this usually leads to coating failure under deep-draw conditions. It has been found that the instant coating compositions contribute greatly improved resistance to failure and blush to such crosslinked, draw-redraw coatings applications.

According to the instant invention there is provided a formable coating composition comprising:

(a) a phenoxy resin

(b) 1 to 50%, preferably about 5 to 30%, by weight of the total resin of a modifier resin which is relatively soft in comparison to the phenoxy resin and is compatible with the phenoxy resin and has:

(1) a reduced viscosity of 0.1 to 2, preferably 0.2 to 1, dl/g in tetrahydrofuran at 25°C;

(2) a glass transition temperature (Tg) of -120 to 30, preferably -100 to 0, °C;

(3) a solubility in Cellosolve acetate at 25°C of at least about 1g/100g of solvent;

(4) a molecular weight of 2,000 to 90,000, preferably 6,000 to 60,000;

(c) a zink pigment as particulate material;

(d) optionally, a crosslinker and using the composition for making a coated article comprising a metallic substrate and adhering thereto as a coating the composition described above.

The combination of the phenoxy resin with the modifier resin produces a coating composition which is formable. By that term is meant that the coating is able to withstand physical operations to the substrate (e.g., rolling, bending, stamping, cutting, etc.) without significant damage to the continuity and adhesion of the coating. Accordingly, the protective properties of the coating are preserved.

As mentioned above, phenoxy resins are substantially linear, thermoplastic resins well known and described in the art, for example, USP 4,476,260; 3,294,747; and 3,277,051, the relevant disclosures of which patents are incorporated herein by reference, especially columns 2-5 of USP 4,476,260. It will be appreciated that included within the scope of the term "phenoxy" are those aromatic epoxy-derived resins of high molecular weight which have very few residual epoxide functional groups, e.g., those sold by Shell Chemical Co. under the trade designations EPONOL Resin Nos. 52, 53, 55.

It will also be appreciated that phenoxy resins, since they contain pendant hydroxyl groups, are

crosslinkable by materials, e.g., melamines, isocyanates, phenolics, and urea-formaldehydes, which are reactive with hydroxyl groups.

The modifier resins useful in this invention are generally amorphous thermoplastic resins, but it is possible to use crystalline resins, provided the mixture of the modifier resin with the phenoxy is generally amorphous. The modifier resins are relatively soft in comparison with the phenoxy resin. By the term "relatively soft" is meant that the modifier resin has a tensile modulus of less than about 48 300 $N/cm^2$ (70,000 psi) at room temperature.

In addition, the useful modifier resins must be compatible with the phenoxy resin. By the term "compatible" is meant that a homogeneous mixture is obtained at room temperature having a single phase and a single Tg.

Moreover, useful modifier resins must meet the specific criteria identified above as to reduced viscosity, moecular weight, glass transition temperature, and solubility in Cellosolve acetate.

Suitable general classes of polymers that are compatible with phenoxy are: polyesters, polyester urethanes, polyether urethanes, and polyalkylene ethers (such as Polyox, polyethylene glycols, and UCON® fluids). The preferred materials are aliphatic polyesters, such as those derived from epsilon-caprolactone. These include a variety of lactone-based polyols and polymers, for example TONE™ polyols and polymers available from Union Carbide Corp., as described in U.S.-A-3,169,945. These materials are produced by the catalytic polymerization of an excess of a lactone, e.g., caprolactone, and an organic polyfunctional initiator having at least 2 reactive hydrogen atoms. Illustrative of the latter are diols, such as ethylene glycol, triethylene glycol, and 1,2-propylene glycol.

When the organic functional initiator is reacted with the lactone, a reaction occurs that can be represented in its simplest form by the equation

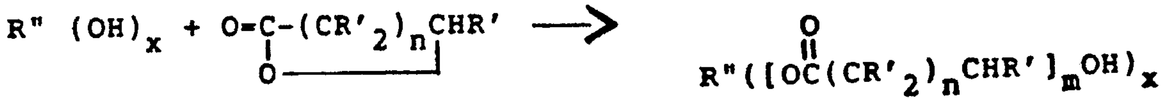

wherein n - 3-6, preferably 4.

In this equation, the organic functional initiator is the $R''(OH)_x$ and the caprolactone is

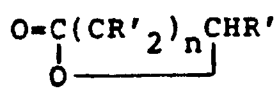

This can be caprolactone itself or a substituted caprolactone wherein R' is an alkyl, alkoxy, aryl, cycloalkyl, alkaryl or aralkyl group, and R" is an alkyl or alkoxy group, all as shown in U.S.P. 3,169,945.

In formulating coatings within the scope of this invention, various important considerations should be kept in mind. Since phenoxy resins themselves confer properties on the coating which are desirable for corrosion resistance (e.g., barrier properties) and for physical handling (e.g., anti-blocking), the concentration of the phenoxy resin should be maintained as high as possible, consistent with the need to be able to deform the coating during manufacture and to meet the bake cycle required. Similarly, it is desirable to maintain the Tg of the phenoxy/modifier resin blend as high as possible, consistent with the need to be able to deform, in order to prevent blocking of the coated metal when stored with adjacent surfaces in contact with each other, e.g., in roll or stacked sheet form. Ideally, a blend Tg of 30 °C or greater is desired. Since the coating compositions of this invention are applied as solutions in organic solvents, the resins and concentrations should be selected for ease of application using standard equipment in the industry. Commonly used solvents include ketones (such as MEK, diethyl ketone, and cyclohexanone) and esters (such as CELLOSOLVE® acetate)(Union Carbide), Dibasic Esters (Du Pont) - mixtures of methyl esters of diacids, ethyl-3-ethoxypropionate). In addition, a variety of solvent blends of the above-mentioned solvents with aromatic solvents (such as toluene, xylene and naphtha) can be used.

When used, such co-solvents should be non-solvents for the phenoxy and should be limited to 50% by weight or less, based on the total solvent. For ease of application, the fully formulated coating composition should have a viscosity of no more than 600 seconds, as measured with a No. 4 Ford cup at 25 °C.

The concentration of the particulate material is not narrowly critical, but usually should be less than 95 % by weight of the total coating, preferably 65 % to 90 %. In the zinc-rich embodiment of the invention, commercially available zinc pigments having a particle size of 2 to 15 μm may conveniently be used. It is

preferred to use zinc pigment having an average particle size of 6 to 7 μm.

It will be understood as well that the coating compositions of this invention may contain functional additives known to the art, e.g., crosslinking agents, suspending agents, viscosity modifiers, colorants, antioxidants, and the like.

Where used, crosslinking agents should be provided in sufficient concentration to maximize blush and solvent resistance while retaining flexibility for improved draw and adhesion performance. Such formulation is within the skill of the art, but typically the crosslinker will be 2-10%, preferably 4-8%, based on total resin solids.

In the examples below, the following procedure was used to make up the coating compositions. All components were charged to a 1-quart container and heated with mild stirring for about 30 minutes at 60-70°C. The container was removed from the heat and the contents were thoroughly mixed, using a Dispersator (available from Premier Mill Corp.) equipped with a 66.7 mm (2-5/8") Cowles head, for 5-10 minutes at about 1500 RPM. The container was then reheated for about 10 minutes to restore the contents to 60-70°C. The composition was then further mixed in a Dispersator equipped with a 63.5 mm (2-1/2") media disc having four 9.5 mm (3/8-inch) diameter holes in it. The mixer was started at about 1060 RPM, and about 80% by volume (based on total formulation) of metal oxide (e.g., aluminum or zirconium oxide) beads (2-mm diameter) was added. Mixing speed was increased to about 3,000 RPM and held there for 15-30 minutes while controlling the temperature at 60-70°C. Mixing was then stopped, and the composition was allowed to settle while cooling to room temperature, and the beads were removed by filtration.

Key properties of compositions so prepared were measured using the following procedures:

Fineness of grind: Determined using Hegman gauge;

Viscosity: No. 4 Ford cup at 25°C;

Specific Gravity: Using a 25 ml specific gravity bottle;

Non-volatiles: 1-2 g of paint are placed in an aluminum dish, weighed, dried in a circulating air oven at 130°C for 1 hour, and reweighed.

Coating compositions for test purposes were formulated according to the following recipe:

| | |
|---|---|
| Phenoxy resin (control) or phenoxy/modifier resin blend | 45 parts |
| Solvent | 287 |
| Zinc pigment | 300 |
| MPA 60X® | 11 |
| Aerosil R-972® | 2.7 |
| CaO | 1.5 |

In the above formulation, MPA 60X is an anti-settling agent available from NL Chemicals, Hightstown, NJ. Aerosil R-972 is a thickener available from Degussa Corp., Teterboro, NJ. Calcium oxide serves as a scavenger for water.

In the examples below, the following materials were used:

| | |
|---|---|
| UCON 25H: | ethylene oxide/propylene oxide copolymer having a viscosity of about 2,000 mPa • s (cP). |
| UCON 75H: | similar copolymer of about 90,000 mPa • s viscosity. Both materials are available commercially from Union Carbide Corp. |
| TONE 0260: | a caprolactone polyol of about 3000 molecular weight which melts at 50-60°C and has a viscosity of about 1,500 $mm^2/s$ (cSt.) at 55°C (130°F). |
| TONE PCL-700: | a caprolactone polymer of about 60,000 molecular weight. Both materials are commercially available from Union Carbide Corp. |
| Estane 5715: | a polyester urethane which is commercially available from BF Goodrich. |
| PKHH Phenoxy: | a phenoxy resin of about 60,000 molecular weight, commercially available from Union Carbide Corp. |
| EPONOL 55-L-32: | a high molecular weight epoxy resin having a Gardner-Holdt viscosity of $Z_4$-$Z_8$ and available from Shell Chemical Co. |
| Dow XP-71709: | a high molecular weight epoxy resin available from Dow Chemical Co., Europe. |
| CYMEL 370: | a melamine resin available from American Cyanamid. |

In the examples below, the formability evaluation procedure identified as the "Double-Draw" test is carried out as follows:
Circular samples (66 mm diameter) are cut from test panels 5-7.6 mm (200-300 mils) thick and are clamped (clamp pressure = 62 N/$cm^2$-900 psi) in a Tinius Olsen ductility tester (Ductomatic A-12). A first draw is performed using a cup which is 35 mm OD x 26 mm high, with a 1 mm (0.040") die clearance. A second draw is then performed using a cup which is 28 mm OD x 36 mm high, with the same die clearance as before. In both draws, the draw rate is 305 mm (12 inches) per minute. The double-drawn cups thus formed are degreased in hexane, dried, given visual ratings, and tape tested. The visual rating scale is as follows:

| RATING | DEFINITION |
|---|---|
| 1 | No skirt - smooth coat. |
| 2 | Skirt - smooth coat. |
| 3 | Generally smooth coat (90%) with slight breaks. |
| 4 | Moderate breaks in coat at least 1 large area. |
| 5 | Moderate breaks in coat with some scale in rest of the coat (30-50%). |
| 6 | Generally scaled (70%) appearance with at least one area of substrate exposed. |
| 7 | Poor coat, scaled appearance (90%), loose flakes and many areas of substrate exposed. |
| 8 | Nearly all of substrate exposed. |

For the tape test, the skirt is carefully removed from the second-draw cup and the cup is weighed on an analytical balance. The cup is taped around its circumference and the tape is then quickly removed. The cup is re-weighed, and the difference is reported as the weight loss. Alternatively, the tape may be weighted, then re-weighed after removal, the difference being reported as weight loss. The tape used is the No. 670 adhesion test tape described in ASTM D-3359, available from Paul N. Gardner Co., Florida.

The adhesion evaluation procedure identified in the examples as the "Olsen Button" test utilizes ball indentations prepared according to ASTM E643-78 using the Tinius Olsen Ductomatic A-12. This is a single-draw test. The tape test is performed on each button. Tape (as previously described) is placed over the button and pressed on the button using a pencil eraser. The tape is then removed within 60 seconds and rated relative to a pictorial chart standard used by General Motors and available from General Motors upon request. In this rating system, 0 represents total coverage of the tape with zinc-rich paint, while 10 represents essentially clean tape, i.e., essentially no removal of paint by the tape; thus, the higher the number the better the adhesion.

In the evaluation procedure identified in the examples as the "blush" test (Table V), a 76 x 102 mm (3" x 4") panel of tin-free steel is coated with a 25% solids solution of resin to yield a dry coating weight of 8 mg/$in.^2$. The panels are air-dried a minimum of 1.24 mg/$cm^2$ (8 mg/$in.^2$). The panels are air-dried a minimum of 0.5 hour and baked at 204°C (400°F) for 10 minutes. A 25.4 mm (1") strip beaker containing water.

Approximately 75% of the length of the strip is immersed in water. The panel and beaker are placed in an autoclave and heated at 121 °C for 90 minutes. The test strips are then removed, patted dry using a Kimwipe, and then visually rated for blush. The exposed portion is rated separately from the immersed portion. The visual rating scale is as follows:

| Rating | Performance | or | Effect |
|---|---|---|---|
| 10 | Perfect | | None |
| 9 | Excellent | | Trace |
| 8 | Very good | | Very slight |
| 6 | Good | | Slight |
| 4 | Fair | | Moderate |
| 2 | Poor | | Considerable |
| 1 | Very poor | | Severe |
| 0 | No value | | Complete failure |

EXAMPLES

The following examples illustrate various embodiments of the invention.

Example 1

Using the coating compositions shown in the Tables below and the recipe described above, coatings were prepared and applied to steel test panels 5-7.6 mm (200-300 mils) thick using a No. 12 wire-wound rod. The panels had been commercially pre-coated with a zinc/chromium primer composition known in the trade as "Dacromet" (a trademark of Metal Coatings, International, Chardon, Ohio). The test panels were baked in a 360 °C oven for 90 seconds, then immediately quenched in a room temperature water bath. Alternatively, the panels were baked in a 260 °C oven for 2 minutes prior to quenching. The resulting dry film thickness of coating of this invention was about 10 µm (0.4 mil). The results of the various tests described above are shown in the following tables.

Table I

Double-Draw Test

(Rating of 1 is best)

| Sample No. | Binder Resin | Visual Rating | Weight Loss (mg) |
|---|---|---|---|
| 1 | PKHH | 6(a) | 31.7(a) |
| | (Phenoxy-control) | 6(b) | 33.5(b) |
| 2 | 80/20 PKHH/UCON | 2.5(a) | 17.8(a) |
| | 25H | 3(b) | 17.4(b) |
| 3 | 80/20 PKHH/UCON | 2.5(a) | 17.5(a) |
| | 75H | 3(b) | 15.3(b) |
| 4 | 75/25 PKHH/TONE | 2(a) | 13.6(a) |
| | 0260 | 2(b) | 13.7(b) |
| 5 | 70/30 PKHH/TONE | 2(a) | 11.8(a) |
| | 0260 | 2(b) | 13.2(b) |
| 6 | 75/25 PKHH/PCL- | 2(a) | 15.6(a) |
| | 700 | 3(b) | 16.3(b) |
| 7 | 50/50 PKHH/Estane 5715 | 5(b) | 19.2(b) |
| 8 | Dow XP-71707(Control) | 7(b) | 75.0(b) |
| 9 | 70/30 Dow XP-71707/ TONE 0260 | 2-3(b) | 12.5(b) |
| 10 | EPONOL-55-L-32(Control) | 7(b) | 119.6(b) |
| 11 | 70/30 EPONOL-55-L-32/ TONE 0260 | 2-3(b) | 27.7(b) |

(a) 360°C bake for 90 seconds

(b) 260°C bake for 2 minutes

Table I illustrates that blends of this invention produce coatings having much better appearance and adhesion after double-draw than the plain phenoxy or high molecular weight epoxy resins of the prior art, and that those improvements were retained even when a lower temperature bake cycle was used.

Table II

Ball Indent (Olsen Button) Adhesion Test

(Rating of 10 is best)

| Sample No. | Binder Resin | TAPE RATING 260°C | 360°C |
|---|---|---|---|
| 1 | PKHH (Phenoxy-control) | 7 | 6 |
| 2 | 80/20 PKHH/UCON 25H | 6 | 2 |
| 3 | 80/20 PKHH/UCON 25H | 7 | 3 |
| 4 | 75/25 PKHH/TONE 0260 | 8 | 7 |
| 5 | 70/30 PKHH/TONE 0260 | 8 | 8 |
| 6 | 75/25 PKHH/PCL-700 | 8 | 7 |
| 7 | 50/50 PKHH/Estane 5715 | 8 | 7 |
| 8 | Dow XP-71707 (control) | 7 | - |
| 9 | 70/30 Dow XP-71707/ TONE 0260 | 8 | - |
| 10 | EPONOL-55-L-32 (control) | 3 | - |
| 11 | 70/30 EPONOL-55-L-32/ TONE 0260 | 7 | - |

Table II indicates that blends of this invention are comparable to or better than PKHH at 260° in this particular test, but that the two blends with UCON fluids do not perform as well as PKHH at 360°. The other three phenoxy blends, however, out-perform PKHH even at 360°.

Example 2

In order to evaluate resistance to corrosive environment, coated samples were subjected to salt spray testing according to ASTM B117-73 with 400 hours exposure time. In Table III, "Button Corrosion" visually measures corrosion at the deformed area (i.e., the button "dome"), while "Field Corrosion" measures corrosion in the flat (undrawn) area of the sample.

Table III

Salt Spray Corrosion Performance

| Sample No. | Binder Resin | Button Corrosion(a) | Field Corrosion(b) |
|---|---|---|---|
| 1 | PKHH (Phenoxy-control) | 8 | 9 |
| 2 | 80/20 PKHH/UCON 25H | 6 | 10 |
| 3 | 80/20 PKHH/UCON 75H | 6 | 9 |
| 4 | 75/25 PKHH/TONE 0260 | 7 | 7 |
| 5 | 70/30 PKHH/TONE 0260 | 8 | 8 |
| 6 | 75/25 PKHH/PCL-700 | 5 | 8 |
| 7 | 50/50 PKHH/Estane 5715 | 8 | 7 |

(a) Ratings are 1-8 with 1 being best.

(b) Ratings are 1-10 with 10 being best.

The corrosion performance of the Olsen buttons on the panels indicates that the blends provide better corrosion protection in drawn areas due to their greater flexibility. Surprisingly, they are very close in corrosion resistance to PKHH in areas that have not been drawn (field corrosion), which is attributed to the good barrier properties of PKHH.

Example 3

Physical properties of the coating compositions exemplified in the preceding examples are shown in Table IV.

## Table IV

### Physical Properties of Coating Compositions

| Sample No. | Binder Resin | Tg °C | Viscosity (b) | Spec. Gravity $g/cm^3$ | % Solids |
|---|---|---|---|---|---|
| 1 | PKHH (Phenoxy-control) | 100 | 185 | 1.96 | 66.3 |
| 2 | 8C/20 PKHH/ UCON 25H | 45 | 86 | 1.94 | 66.2 |
| 3 | 80/20 PKHH/ UCON 75H | 46 | 100 | 1.93 | 65.8 |
| 4 | 75/25 PKHH/ TONE 0260 | 43 | 83 | 1.95 | 65.3 |
| 5 | 70/30 PKHH/ TONE 0260 | 35 | 68 | 1.94 | 65.6 |
| 6 | 75/25 PKHH/ PCL-700 | 46 | 600 | 2.00 | 67.3 |
| 7 | 50/50 PKHH/ Estane 5715 | 68 | 382 | 1.99 | 66.9 |

(b) Seconds, Ford #4 cup at 25°C

Example 4

Formulations for crosslinking were prepared using the following recipe:

204 parts Cellosolve acetate

21 parts Aromatic 150 (an aromatic solvent blend available from Exxon)

75 parts Resin or Resin Blend

To the above 25% solids solution is added CYMEL 370 on the basis of parts CYMEL 370 per hundred parts resin (PHR). Compositions were formulated and tested with the results shown in Table V. For these tests, steel panels (as previously described) were coated using a #28 wire-wound rod. The wet panels were baked in a 400 ° C oven for 10 minutes. The dried coatings weighed approximately 1.24 $mg/cm^2$ (8 mg/in.$^2$).

**Table V**

**Crosslinked Coatings**

| Resin | Ratio | Cymel 370 PHR | Double-Draw Visual | Blush |
|---|---|---|---|---|
| PKHH | 100% | 4 | 3 | Moderate |
| PKHH | 100% | 8 | 7-8 | Slight |
| PKHH/TONE 0260 | 70/30 | 4 | 1 | None |
| PKHH/TONE 0260 | 70/30 | 8 | 2-3 | None |
| Dow XP-71707 | 100% | 8 | 7 | |
| Dow XP-71707/ TONE 0260 | 70/30 | 8 | 1 | |
| EPONOL 55-L-32 | 100% | 8 | 7 | |
| EPONOL 55-L-32/ TONE 0260 | 70/30 | 8 | 1 | |

Table V demonstrates that blends of this invention provide crosslinked coatings which have excellent formability and blush resistance. Phenoxy-type resins when crosslinked sufficiently to reduce blush are not able to undergo double-draw without failure. The blends, however, provide excellent formability and even better blush resistance than a phenoxy-type product crosslinked at comparable levels.

## Claims

1. A formable coating composition comprising:
   (a) a phenoxy resin,
   (b) 1 to 50% by weight of the total resin of a modifier resin which is relatively soft in comparison to the phenoxy resin and is compatible with the phenoxy resin and has:
      (1) a reduced viscosity of 0.1 to 2 dl/g in tetrahydrofuran at 25° C;
      (2) a Tg of -120 to 30° C;
      (3) a solubility in Cellosolve acetate at 25° C of at least about 1 g per 100g of solvent;
      (4) a molecular weight of 2,000 to 90,000,
   (c) a zink pigment as particulate material, and
   (d) optionally, a crosslinker.

2. The coating composition of claim 1 wherein the concentration of the modifier resin is 5 to 30% by weight.

3. The coating composition of claim 1 or 2 wherein the modifier resin has:
   (1) a reduced viscosity of 0.2 to 1 dl/g in tetrahydrofuran at 25° C; and
   (2) a Tg of -100 to 0° C.

4. The coating composition of claims 1 to 3 wherein the phenoxy resin has a molecular weight of about 60 000.

5. The coating composition of claims 1 to 4 wherein the modifier resin is a polyalkylene oxide, a polyester or a polyester urethane.

6. The coating composition of claim 5 wherein the polyalkylene oxide is an ethylene oxide/propylene oxide copolymer having a viscosity of about 2 000 or of about 90 000 mPa•s.

7. The coating composition of claim 5 wherein the polyester is an aliphatic polyester.

8. The coating composition of claim 7 wherein the aliphatic polyester is derived from epsiloncaprolactone having a molecular weight of about 3 000, a melting range of 50 to 60 °C and a viscosity of 1 500 $mm^2/s$ at 55 °C or a molecular weight of 60 000.

9. The coating composition of claims 1-8 wherein the crosslinker is a melamine resin.

10. The use of the coating composition of claims 1 to 9 for corrosion-resistant articles comprising a metallic substrate and adhering thereto the coating composition, especially articles comprising a drawn-redrawn metallic substrate and adhering thereto the coating composition.

## Revendications

1. Composition de revêtement façonnable, comprenant :
   (a) une résine phénoxy,
   (b) 1 à 50 % en poids de la résine totale d'une résine modificatrice qui est relativement molle comparativement à la résine phénoxy et qui est compatible avec la résine phénoxy et a :
      (1) une viscosité réduite de 0,1 à 2 dl/g dans le tétrahydrofuranne à 25 °C ;
      (2) une température Tg de -120 à 30 °C ;
      (3) une solubilité dans l'acétate de Cellosolve à 25 °C d'au moins environ 1 g pour 100 g de solvant ;
      (4) un poids moléculaire de 2000 à 90 000,
   (c) un pigment au zinc sous forme de matière en particules et
   (d) à titre facultatif, un agent de réticulation.

2. Composition de revêtement suivant la revendication 1, dans laquelle la concentration de la résine modificatrice est de 5 à 30 % en poids.

3. Composition de revêtement suivant la revendication 1 ou 2, dans laquelle la résine modificatrice a :
   (1) une viscosité réduite de 0,2 à 1 dl/g dans le tétrahydrofuranne à 25 °C ; et
   (2) une température Tg de -100 à 0 °C.

4. Composition de revêtement suivant les revendications 1 à 3, dans laquelle la résine phénoxy a un poids moléculaire d'environ 60 000.

5. Composition de revêtement suivant les revendications 1 à 4, dans laquelle la résine modificatrice est un polyalkylèneoxyde, un polyester ou un polyesteruréthanne.

6. Composition de revêtement suivant la revendication 5, dans laquelle le polyalkylèneoxyde est un copolymère oxyde d'éthylène/oxyde de propylène ayant une viscosité d'environ 2000 ou d'environ 90 000 mPa.s.

7. Composition de revêtement suivant la revendication 5, dans laquelle le polyester est un polyester aliphatique.

8. Composition de revêtement suivant la revendication 7, dans laquelle le polyester aliphatique est dérivé d'epsilon-caprolactone ayant un poids moléculaire d'environ 3000, une plage de fusion de 50 à 60 °C et une viscosité de 1500 $mm^2/s$ à 55 °C ou un poids moléculaire de 60 000.

9. Composition de revêtement suivant les revendications 1 à 8, dans laquelle l'agent de réticulation est une résine de mélamine.

10. Utilisation de la composition de revêtement suivant les revendications 1 à 9 pour des articles résistant à la corrosion, comprenant un substrat métallique auquel adhère la composition de revêtement, notamment des articles comprenant un substrat métallique étiré-réétiré auquel adhère la composition de revêtement.

## Ansprüche

1. Formbare Überzugsmasse, umfassend:
   (a) ein Phenoxyharz
   (b) 1 bis 50 % des Gesamtgewicht des Harzes eines modifizierenden Harzes, das im Vergleich mit dem Phenoxyharz relativ weich und mit dem Phenoxyharz verträglich ist und:
      (1) eine reduzierte Viskosität von 0,1 bis 2 dl/g in Tetrahydrofuran bei 25° C;
      (2) eine Tg von -120 bis 30° C;
      (3) eine Löslichkeit in Cellosolveacetat bei 25° C von mindestens etwa 1 g je 100 g Lösungsmittel; und
      (4) ein Molekulargewicht von 2 000 bis 90 000 aufweist;
   (c) ein Zinkpigment als teilchenförmiges Material; und
   (d) gegebenenfalls einen Vernetzer.

2. Überzugsmasse nach Anspruch 1, dadurch gekennzeichnet, daß die Konzentration des Modifizierharzes 5 bis 30 Gew.-% ausmacht.

3. Überzugsmasse nach Anspruch 1 oder 2, dadurch gekennzeichnet, daß das Modifizierharz:
   (1) eine reduzierte Viskosität von 0,2 bis 1 dl/g in Tetrahydrofuran bei 25° C und
   (2) eine Tg von -100 bis 0° C aufweist.

4. Überzugsmasse nach den Ansprüchen 1 bis 3, dadurch gekennzeichnet, daß das Phenoxyharz ein Molekulargewicht von etwa 60 000 aufweist.

5. Überzugsmasse nach den Ansprüchen 1 bis 4, dadurch gekennzeichnet, daß das Modifizierharz ein Polyalkylenoxid, ein Polyester oder ein Polyesterurethan ist.

6. Überzugsmasse nach Anspruch 5, dadurch gekennzeichnet, daß das Polyalkylenoxid ein Ethylenoxid/Propylenoxid-Copolymer mit einer Viskosität von etwa 2 000 oder von etwa 90 000 mPa•s ist.

7. Überzugsmasse nach Anspruch 5, dadurch gekennzeichnet, daß der Polyester ein aliphatischer Polyester ist.

8. Überzugsmasse nach Anspruch 7, dadurch gekennzeichnet, daß der aliphatische Polyester von $\epsilon$-Caprolacton abgeleitet ist und ein Molekulargewicht von etwa 3 000, einen Schmelzbereich von 50 bis 60° C und eine Viskosität von 1 500 $mm^2/s$ bei 55° C oder einem Molekulargewicht von 60 000 aufweist.

9. Überzugsmasse nach den Ansprüchen 1 bis 8, dadurch gekennzeichnet, daß der Vernetzer ein Melaminharz ist.

10. Verwendung der Überzugsmasse nach Anspruch 1 bis 9 für korrosionsbeständige Erzeugnisse, die ein metallisches Substrat und daran haftend die Überzugsmasse umfassen, insbesondere für Erzeugnisse, die ein gezogenes-wiedergezogenes metallisches Substrat und daran haftend die Überzugsmasse umfassen.